# EUROPEAN PATENT APPLICATION

(11) **EP 1 102 055 A2**
(43) Date of publication of application: **23.05.2001**
(21) Application number: 00402896.5
(22) Date of filing: 19.10.2000
(51) Int. Cl.: G01N 15/06

(54) **Method for counting the particles in a sample gas**

(30) Priority: 18.11.1999 JP 32852499
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Kimura, Masao, 75321 Paris cedex 07 (FR); Tarutani, Kohei, 75321 Paris cedex 07 (FR)
(74) Representative: Vesin, Jacques

(57) **Abstract**

(Problem)

To provide a method for counting the particles in a sample gas that can accurately count microfine particles.

(Solution)

In order to carry out calibration, a sample gas is passed from a source **41** through a bypass conduit **44**, loaded with size-controlled particles using a porous element **27**, and then mixed with a saturated vapor from a source **51**. The resulting fluid is cooled by passage through a condenser **53**, resulting in condensation of the saturated vapor with the size-controlled particles acting as nuclei. At this point, the temperature of the condenser **53** is set so as to bring the size of the size-controlled particles into agreement or equivalence with the detection limit of the counter **54**. In order to carry out actual measurement, sample gas is subsequently introduced from the source **41** into the main conduit **43** and mixed with the saturated vapor to generate a measurement fluid. The number of particles in the sample gas is then counted using the temperature-adjusted condenser **53** and the counter **54**.

## Description

### Detailed Description of the Invention

### Field of the Invention

This invention relates to a method for counting the particles in a sample gas. More particularly, this invention relates to a method for counting the particles in the process gases, for example, the reactive gases and carrier gases, that are used during the fabrication of semiconductor devices and electronic instruments and devices.

### Description of the Prior Art

Both the amount and composition of the particles present in the process gases - and particularly the reactive gases - must be accurately known in those industries concerned with the fabrication of semiconductor devices and electronic instruments and devices. Counters that can directly count the number of particles in a sample gas, however, suffer from relatively high limits on the detectable particle dimensions.

In contrast to this, the counting of condensation nuclei, for example, as disclosed in Japanese Laid Open (Kokai or Unexamined) Patent Application Number Hei 3-99248 (99,248/1991), is a method known for the counting of microfine particles. In this method, a measurement fluid comprising a sample gas + saturated vapor mixture is cooled by passage through a condenser. This cooling causes condensation of the saturated vapor with the particles present in the sample gas acting as nuclei. The number of liquid drops produced by this process is then counted.

Unfortunately, when in particular the sample gas is reactive, it is quite difficult for the heretofore known condensation nuclei counting methods to accurately count microparticles with a particular microparticle size set as a threshold value. This problem is related to the fact that a reliable method for counter calibration has yet to be established.

Thus, the light-scattering particle measurement instruments (hereinafter abbreviated simply as light-scattering instruments) employed for counting the microparticles in a gas or liquid require a particle size calibration prior to their use. This calibration process is carried out using a fluid - known as the reference fluid - that contains size-controlled particles in a dispersed state. Monodisperse particles exhibiting substantially a single peak in their size distribution are used as the size-controlled particles in this calibration.

The reference fluids used to calibrate the light-scattering instruments used with gases generally consist of monodisperse particles, e.g., polystyrene latex (PSL), dispersed in an inert gas. In specific terms, a typical reference fluid of this type consists of the gaseous fluid afforded by spraying a liquid that contains commercial PSL monodisperse particles into an inert gas flow at around atmospheric pressure. Dispersions of PSL monodisperse particles in water are ordinarily used as the reference fluids for calibrating the light-scattering instruments used on liquids.

In order to increase the measurement accuracy of light-scattering instruments, it is desirable for the matrix fluid of the calibrating reference fluid to be the fluid that will ultimately be measured (sample gas) and for this sample gas to be employed under conditions approximating the actual conditions of use. However, sample gases such as HCl, HBr, SiH₄, PH₃, and B₂H₆ are reactive and at the point of measurement generally reside at pressures substantially higher than atmospheric pressure.

The following problems are associated with the use of sample gas at around actual use conditions as the matrix fluid in the prior-art methodology for forming a fluid flow that contains size-controlled particles. First, when the sample gas is a reactive fluid, reactions between the reactive sample gas and the size-controlled particles can lead to changes in particle dimensions and to the admixture of reaction products into the matrix fluid. Second, since the admixture and dispersion of the size-controlled particles into the fluid has heretofore been effected by spraying, a shift in composition is caused by admixture of the sprayed gas into the matrix fluid. Third, this method of introduction and dispersion cannot be used when the sample gas is a pressurized gas.

### Problems to Be Solved by the Invention

This invention was developed in view of the problems described above for the prior art. It is an object of this invention to provide a method for counting the particles present in a sample gas wherein said method has the ability to accurately count microparticles with a particular microparticle size set as a threshold value.

### Means Solving the Problems

The first aspect of this invention is a method for counting the particles in a sample gas, said method characteristically being provided with
a process in which a sample gas is passed through a filter in order to remove the particles present therein and a calibration fluid is formed by subsequently introducing size-controlled particles set at a prescribed size into said sample gas and also mixing a substantially inert saturated vapor into said sample gas, wherein
said size-controlled particles are substantially inert with respect to said sample gas and said saturated vapor, and
said size-controlled particles are admixed and dispersed into said sample gas by passing the sample gas through a porous member loaded with said size-controlled particles while said porous member is being vibrated in order thereby to release the size-controlled particles from said porous member and admix and disperse the size-controlled particles into the sample gas;
a process in which reference liquid drops are produced in said calibration fluid by condensing the saturated vapor on the size-controlled particles functioning as nuclei by cooling said calibration fluid by passage of said calibration fluid through a condenser;
a process in which, while the aforesaid reference liquid drop-loaded calibration fluid is flowing through a counter that has a particle size-dependent detection limit, the temperature of the condenser is adjusted in order to acquire, as a function of the prescribed size of the size-controlled particles, the set temperature for the condenser that brings the size of the said reference liquid drops into agreement with the said detection limit of the counter;
a process in which, after acquisition of the said set temperature for the condenser, the said sample gas and saturated vapor are mixed to form a measurement fluid;
a process in which measurement liquid drops are formed in said measurement fluid by passing said measurement fluid through the condenser set to the aforesaid set temperature and thereby cooling said measurement fluid and inducing condensation of the saturated vapor with the particles in the sample gas acting as nuclei; and
a process in which the number of measurement liquid drops present in the sample gas is counted by passing the aforesaid measurement fluid loaded with said measurement liquid drops through the counter.

The second aspect of this invention is characterized by the use, as the size-controlled particles in the method of the first aspect, of monodisperse particles that exhibit substantially a single peak in their size distribution.

The third aspect of this invention is characterized by the inclusion, in the process for forming the calibration fluid in the method of the second aspect, of a process that can alternately load the sample gas with monodisperse particles set at different prescribed particle sizes.

The fourth aspect of this invention is characterized in that the prescribed particle size of the size-controlled particles in the method of any of the first through third aspects is less than or equal to one-half the detection limit of the counter.

The fifth aspect of this invention is characterized in that, in the method according to any of the first to fourth aspects, the sample gas is a gas selected from the group consisting of SiH₄, PH₃, B₂H₆, AsH₃, SiCl₂H₂, H₂, HCl, Cl₂, F₂, HBr, HI, NH₃, CH₄, C₂H₂, C₂H₄, C₂H₆, C₃H₈, C₄H₁₀, NOₓ, CO, O₂, and O₃; and the saturated vapor is a vapor selected from the group consisting of C₄F₈, C₃F₈, C₂F₆, CH₄, CHF₃, CCl₂F₂, C₂ClF₅, C₂Cl₂F₄, CO₂, N₂O, N₂, and Ar.

The sixth aspect of this invention is characterized in that, in the method according to any of the first to fifth aspects, the vibration applied to the porous member is ultrasonic vibration.

The seventh aspect of this invention is characterized in that, in the method according to any of the first to sixth aspects, the pressure, temperature, and flowrate of the sample gas and saturated vapor in the case of the calibration fluid are substantially the same as the pressure, temperature, and flowrate of the sample gas and saturated vapor in the case of the measurement fluid.

### Embodiments of the Invention

In the explanation that follows, constituent elements that have approximately the same structure and function are designated with the same reference symbol and explanations for such elements will be repeated only when necessary.

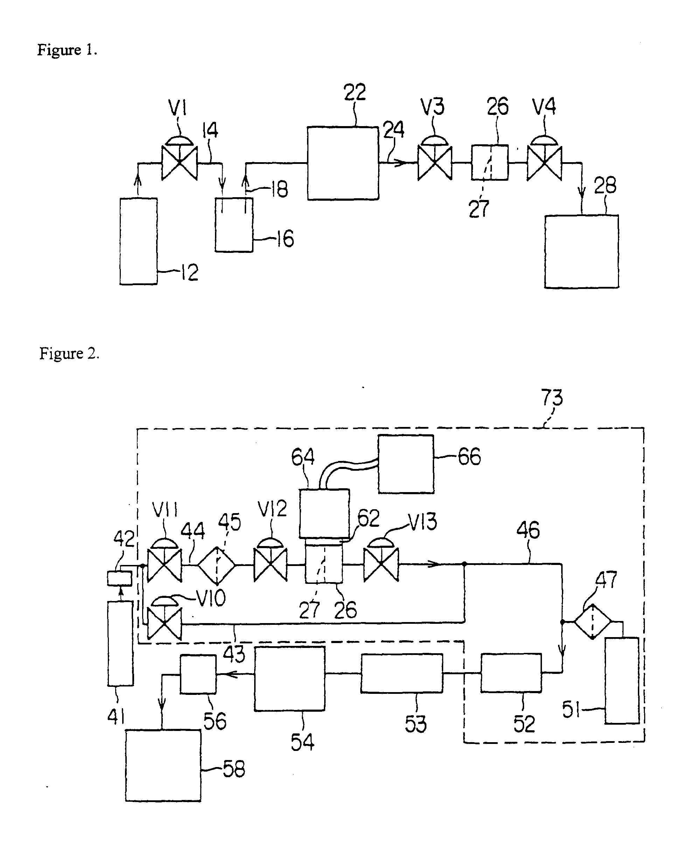

Figure 1 contains a schematic diagram of a system for generating size-controlled particles as may be used by the method according to the present invention for counting the particles in a sample gas.

In Figure 1, a supply conduit **14** equipped with a valve **V1** is connected to the outlet of a gas source **12** that can supply a carrier gas, e.g., ultrapure N₂, at around atmospheric pressure. This supply conduit **14** is connected to a starting particle source **16** that can introduce starting particles of various sizes into the carrier gas. The starting particles should be composed of material inert to the sample gas and saturated vapor (e.g., HCl or C₄F₈, see below). SiO₂ is an example of such an inert material. This particle source **16** is structured so as to carry out mixing and dispersion of a starting particle-loaded liquid (e.g., pure water) into the carrier gas by spraying.

The starting particle-loaded carrier gas is supplied through the conduit **18** to a dry-process classifier **22** that has the ability to classify the starting particles. This classifier **22** can be a device that electrostatically classifies the starting particles, an example of which is the Electrostatic Aerosol Classifier 3071A available from Kanomax Japan Incorporated.

The outlet conduit **24** of the particle classifier **22** communicates across valves **V3** and **V4** with a freely attachable/detachable collector **26** that collects the classified particles. The outlet conduit **24** is connected downstream from the collector **26** to an exhaust system **28**. Contained within the collector **26** is a porous member **27** that can electrostatically collect particles. The porous member **27** and the casing of the collector **26** should be made of materials that are inert to at least the sample gas (see below). For example, the porous member **27** can be composed of an ultrahigh purity gas-grade stainless steel (SUS316) filter that contains pores that are sufficiently larger than the size of the size-controlled particles (see below).

Treatment by the structure shown in Figure 1 is carried out continuously while a carrier gas, e.g., N₂, flows from the gas source **12** to the exhaust system **28**. This treatment includes a preliminary dispersion process, a classification process, and a collection process.

In the preliminary dispersion process, the aforementioned SiO₂ starting particles are sprayed from the particle source **12** into the approximately atmospheric pressure carrier gas coming from the gas source **12.** This results in the introduction, dispersion, and entrainment of the starting particles into the carrier gas.

In the classification process, size-controlled particles are obtained by classification of the starting particles upon passage of the starting particle-loaded carrier gas through the classifier **22**. The size-controlled particles to which this invention is directed are microparticles with sizes from about 3 nm to 1 µm.

The classification process is conducted only once when monodisperse particles with substantially a single peak in their size distribution are required for the size-controlled particles. The classification process is conducted a plural number of times when the size-controlled particles must take the form of polydisperse particles that have substantially a plural number of peaks in their size distribution.

In the collection process under consideration, the size-controlled particles are captured on the porous member **27** by passing the carrier gas loaded with the size-controlled particles through the porous member **27**. At this point the size-controlled particles are electrostatically adsorbed onto the porous element **27**.

After the collector **26** has captured the size-controlled particles as described above, the collector **26** is detached from the outlet conduit **24** and transferred into the structure illustrated in Figure 2. Figure 2 contains a schematic drawing that shows one embodiment of a system for implementing the method of this invention for counting the particles in a sample gas.

The structure shown in Figure 2 is provided with a gas source **41** capable of supplying a reactive sample gas, e.g., HCl, at a pressure above atmospheric pressure, e.g., at 0.3 MPa. A flow controller **42** capable of controlling the flowrate of the sample gas is provided at the outlet from the gas source **41**. A main conduit **43** and a bypass conduit **44** are provided in parallel to each other at the outlet from the flow controller **42**. This main conduit **43** is itself provided with a valve **V10**, while the bypass conduit **44** is provided with a valve **V11**. The bypass conduit **44** is also provided with a filter **45** for removing the particles present in the sample gas. This filter **45** can be the same type of ultrapure gas-grade stainless steel (SUS316) filter as used for the porous member **27** of the collector **26**. The treated collector **26** (see Figure 1) is installed in a freely attachable/detachable manner in the bypass conduit **44** between the valve **12** and the valve **13**.

An ultrasound oscillator **64** is attached on the exterior surface of the casing of the collector 26 through the intermediary of an acoustic coupler **62**. A viscous substance, e.g., jelly, can be used as the acoustic coupler **62**. This oscillator **64** has a horn that amplifies the sound wave vibrations, and the terminus of this horn is connected to the collector **26** across the acoustic coupler **62**. The oscillator **64** is driven by a highfrequency power source **66** to generate ultrasound with a frequency of 20 kHz to 1 MHz.

Downstream conduit **46,** which is provided after the confluence of the main conduit **43** and the bypass conduit **44**, is connected to a saturated vapor source **51** capable of supplying a saturated vapor that is inert to the sample gas and that resides at, for example, 0.2 MPa. This saturated vapor is exemplified by C₄F₈, and its supply from the saturated vapor source **51** is carried out across the filter **47**. This filter **47** can be an ultrapure gas-grade stainless steel (SUS316) filter. The downstream conduit **46** is also provided with a mixer **52** that mixes the sample gas and saturated vapor to homogeneity. A condenser **53** and a laser particle counter **54** are provided in the given sequence downstream from the mixer **52**. The laser particle counter **54** is connected through a flow controller **56** to an exhaust system **58**.

The main conduit **43**, bypass conduit **44**, downstream conduit **46**, and saturated vapor source **51** are all placed within a constant temperature zone **73** set at a uniform temperature through the action of a temperature controller provided with a heater and/or cooler, and are thus held at substantially the same temperature. Since the sample gas from the gas source **41** is mixed into the saturated vapor from the saturated vapor source **51**, the saturated vapor source **51** should be set at a pressure lower than that of the gas source **41**. When the sample gas from the gas source **41** has a low vapor pressure, the constant temperature zone **73** should be cooled in order to reduce the vapor pressure of the saturated vapor from the saturated vapor source **51**.

The condenser **53** functions to cool the mixed sample gas + saturated vapor flow and thereby condense the saturated vapor with the particles present in the mixed flow acting as nuclei. This produces larger, easily measurable liquid drops in the mixed flow. Employing light-scattering technology, the laser particle counter **54** counts the number of liquid particles produced by this mechanism. Since the liquid drops grow by condensation of the saturated vapor with the particles present acting as nuclei, the threshold original particle size for particles countable by the system shown in Figure 2 is appreciably reduced, for example, to 0.5 µm, 0.1 µm, or 0.01 µm, even when the detection limit of the laser particle counter **54** is 1 µm.

Moreover, since the liquid drops grow by condensation of the saturated vapor with the particles present acting as nuclei, the drop size will depend on the temperature of the condenser **53** and will increase as the set temperature of the condenser **53** is reduced. Thus, when the laser particle counter **54** has a constant detection limit, the counter will be capable of counting smaller particles as the set temperature of the condenser **53** is dropped. As a result, the threshold original particle size for particles countable by the system shown in Figure 2 can be set or adjusted using the set temperature of the condenser **53** as a parameter.

The method of this invention for counting the particles present in a sample gas is carried out according to the following sequence in the embodiment of this invention that employs the system shown in Figure 2.

The system in Figure 2 is first calibrated in the counting method of this embodiment. For this purpose, the valve **V10** is closed and the valve **V11** is opened and sample gas is allowed to flow from the gas source **41** into the bypass conduit **44**.

The sample gas passes through the filter **45** in the bypass conduit **44**, which removes the particles present in the sample gas, and is subsequently loaded in porous member **27** with size-controlled particles whose dimensions have been established at a prescribed value, for example, with monodisperse particles set at 0.1 µm. During this loading step, ultrasound vibrations are applied from the oscillator **64** to the porous member **27** loaded with the size-controlled particles while the sample gas is flowing through the porous member **27**. This results in release of the size-controlled particles from the porous member **27** and their admixture and dispersion into the sample gas. These size-controlled particles must be substantially inert to both the sample gas and the below-described saturated vapor.

The ultrasound is desirably produced in pulse form by the oscillator **64** in order to avoid damage to the oscillator **64.** In more specific terms, the ultrasound pulse width should be set at from 1 millisecond to 10 seconds and is preferably set at 10 milliseconds to 100 milliseconds and the interval should be set at 100 milliseconds to 100 seconds and preferably at 1 second to 10 seconds. Another suitable method for applying ultrasound to the porous member **27** comprises immersing the collector **26** in a water bath and applying the ultrasound through vibration of the water.

Next, saturated vapor that is substantially inert with respect to the sample gas is fed into the sample gas from the saturated vapor source **51**. The sample gas is then mixed to homogeneity with the saturated vapor in the mixer **52** to form a calibration fluid. This calibration fluid is subsequently cooled by passage through the condenser **53** in order to condense the saturated vapor with the size-controlled particles acting as nuclei and thereby generate reference liquid drops in the calibration fluid.

While then passing this calibration fluid through the laser particle counter **54** (detection limit ≥ 0.5 µm, for example, 1 µm), the temperature of the condenser **53** is adjusted in order to acquire the temperature T1 of the condenser **53** that forms the boundary for recognition of the size-controlled particles by the counter **54**. Using this temperature T1 of the condenser **53** as reference, the system in Figure 2 can be calibrated so as to enable counting of particles with sizes equal to or greater than the prescribed original size of the size-controlled particles.

The system in Figure 2 is then used to actually count the particles present in the sample gas. For this, the valve **V11** is closed and the valve **V10** is opened in order to allow sample gas to flow from the gas source **41** into the main conduit **43**.

The particles present in the sample gas are not removed (filter **45**) in the main conduit **43** nor are size-controlled particles introduced (porous member **27**) into the sample gas in the main conduit **43**. As a consequence, the sample gas flows in the main conduit **43** in its original, particulate-contaminated condition. The aforementioned saturated vapor is then supplied into the sample gas from the saturated vapor source **51** and the sample gas is mixed to homogeneity with the saturated vapor in the mixer **52** to give the measurement fluid. This measurement fluid is cooled by passage through the condenser **53**, which results in condensation of the saturated vapor on the contained particles functioning as nuclei and the corresponding production in the measurement fluid of measurement liquid drops. At this point, the condenser **53** is set at the reference temperature T1 and ideally has been preliminarily set at the reference temperature T1.

The measurement fluid is subsequently passed through the laser particle counter **54** in order to count the number of measurement liquid drops present in the sample gas. At this point, since the prescribed particle size of the size-controlled particles (for example, 0.1 µm) has been made the threshold value by setting the condenser **53** to the temperature T1, particles with sizes greater than or equal to the said prescribed size can be counted among the universe of particles present in the sample gas.

Calibration and actual measurement desirably employ not only substantially the same sample gas and saturated vapor, but also substantially the same pressure, temperature, and flowrate for the sample gas and substantially the same pressure, temperature, and flowrate for the saturated vapor. This enables a more accurate particle size calibration.

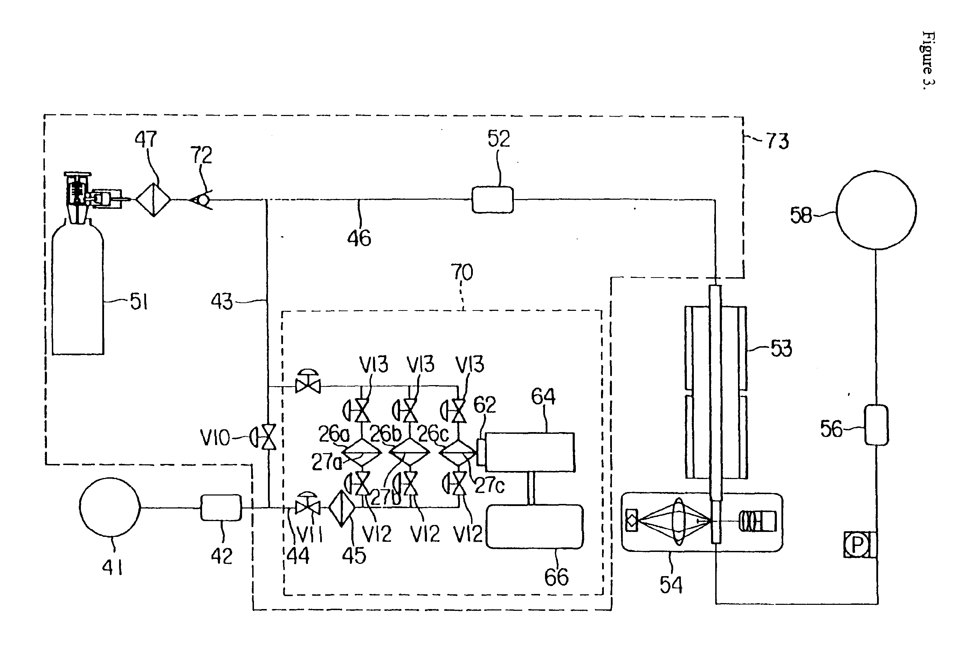

Figure 3 contains a schematic drawing that illustrates another embodiment of a system for executing the method according to the present invention for counting the particles in a sample gas.

The major difference between the systems in Figures 2 and 3 is the provision in the bypass conduit **44** in the system in Figure 3 of a mechanism for the alternating use of 3 different sizes of size-controlled particles in the bypass conduit 44. In specific terms, collectors **26a, 26b**, and **26c** are installed in parallel. These collectors **26a, 26b**, and **26c** are equipped, respectively, with porous members **27a, 27b**, and **27c** - each of which has been loaded by the process illustrated in Figure 1 with monodisperse particles with a different prescribed size. For example, the sizes of the monodisperse particles on porous members **27a, 27b**, and **27c** can be set at, respectively, 0.01 µm, 0.1 µm, and 0.5 µm.

The system illustrated in Figure 3 also contains several components typically required in real-world systems. For example, a check valve **72** is provided at the outlet of the saturated vapor source **51** at the head of the downstream conduit **46** in order to prevent backflow into the saturated vapor source **51**. A Peltier element, for example, can be used in the condenser **53**.

The method for counting the particles in sample gas in the embodiment of the invention that employs the system illustrated in Figure 3 is essentially the same as in the method explained with reference to the system illustrated in Figure 2. In the embodiment under consideration, however, monodisperse particles in different prescribed sizes can be alternately loaded into the sample gas to form the calibration fluid. In this embodiment, the set temperatures for the condenser **53** afforded by calibrations using 0.01 µm, 0.1 µm, and 0.5 µm monodisperse particles will have different values, for example, 5°C, 10°C, and 15°C.

The method according to the present invention for counting the particles in a sample gas has a very general applicability and can employ various species of sample gases, saturated vapors, and size-controlled particles.

In specific terms, the sample gas can be selected from the group consisting of SiH₄, PH₃, B₂H₆, AsH₃, SiCl₂H₂, H₂, HCl, Cl₂, F₂, HBr, HI, NH₃, CH₄, C₂H₂, C₂H₄, C₂H₆, C₃H₈, C₄H₁₀, NOₓ (nitrogen oxides), CO, O₂, and O₃. The saturated vapor can be selected from the group consisting of C₄F₈, C₃F₈, C₂F₆, CH₄, CHF₃, CCl₂F₂, C₂ClF₅, C₂Cl₂F₄, CO₂, N₂O, N₂, and Ar.

Considered with respect to the substances listed above, SiO₂ is ideally used as the material of the size-controlled particles. Otherwise, SiC, Si₃N₄, Al₂O₃, Cr₂O₃, Fe₂O₃, Si, Fe, Ni, Ta, W, or PSL can be used as the material of the size-controlled particles insofar as the particular material selection is inert to the sample gas and saturated vapor.

### Advantageous Effects of the Invention

As has been explained hereinabove, the method according to the present invention for counting the particles in a sample gas makes possible the accurate counting of microfine particles with a prescribed microfine particle size set as a threshold value.

### Brief Description of the Drawings

Figure 1 contains a schematic drawing of a system for generating the size-controlled particles that are used in the method according to the present invention for counting the particles in a sample gas.

Figure 2 contains a schematic drawing of one embodiment of a system for implementing the method according to the present invention for counting the particles in a sample gas.

Figure 3 contains a schematic drawing of another embodiment of a system for implementing the method according to the present invention for counting the particles in a sample gas.

## Claims

1. Method for counting the particles in a sample gas, said method characteristically being provided with
a process in which a sample gas is passed through a filter in order to remove the particles present therein and a calibration fluid is formed by subsequently introducing size-controlled particles set at a prescribed size into said sample gas and also mixing a substantially inert saturated vapor into said sample gas, wherein said size-controlled particles are substantially inert with respect to said sample gas
and said saturated vapor, and
said size-controlled particles are admixed and dispersed into said sample gas by passing the sample gas through a porous member loaded with said size-controlled particles while said porous member is being vibrated in order thereby to release the size-controlled particles from said porous member and admix and disperse the size-controlled particles into the sample gas;
a process in which reference liquid drops are produced in said calibration fluid by condensing the saturated vapor on the size-controlled particles functioning as nuclei by cooling said calibration fluid by passage of said calibration fluid through a condenser;
a process in which, while the aforesaid reference liquid drop-loaded calibration fluid is flowing through a counter that has a particle size-dependent detection limit, the temperature of the condenser is adjusted in order to acquire, as a function of the prescribed size of the size-controlled particles, the set temperature for the condenser that brings the size of the said reference liquid drops into agreement with the said detection limit of the counter;
a process in which, after acquisition of the said set temperature for the condenser, the said sample gas and saturated vapor are mixed to form a measurement fluid;
a process in which measurement liquid drops are formed in said measurement fluid by passing said measurement fluid through the condenser set to the aforesaid set temperature and thereby cooling said measurement fluid and inducing condensation of the saturated vapor with the particles in the sample gas acting as nuclei; and
a process in which the number of measurement liquid drops present in the sample gas is counted by passing the aforesaid measurement fluid loaded with said measurement liquid drops through the counter.

2. The method of Claim 1 for counting the particles in a sample gas, characterized in that the size-controlled particles are monodisperse particles that exhibit substantially a single peak in their size distribution.

3. The method of Claim 1 or 2 for counting the particles in a sample gas, characterized in that the process for forming the calibration fluid includes a process that can alternately load the sample gas with monodisperse particles set at different prescribed particle sizes.

4. Method according to any of Claims 1 to 3 for counting the particles in a sample gas, characterized in that the prescribed particle size of the size-controlled particles is less than or equal to one-half the detection limit of the counter.

5. Method according to any of Claims 1 to 4 for counting the particles in a sample gas, characterized in that the sample gas is a gas selected from the group consisting of SiH₄, PH₃, B₂H₆, AsH₃, SiCl₂H₂, H₂, HCI, Cl₂, F₂, HBr, HI, NH₃, CH₄, C₂H₂, C₂H₄, C₂H₆, C₃H₈, C₄H₁₀, NOₓ, CO, O₂, and O₃; and the saturated vapor is a vapor selected from the group consisting of C₄F₈, C₃F₈, C₂F₆, CH₄, CHF₃, CCl₂F₂, C₂ClF₅, C₂Cl₂F₄, CO₂, N₂O, N₂, and Ar.

6. Method according to any of Claims 1 to 5 for counting the particles in a sample gas, characterized in that the vibration applied to the porous member is ultrasonic vibration.

7. Method according to any of Claims 1 to 6 for counting the particles in a sample gas, characterized in that the pressure, temperature, and flowrate of the sample gas and saturated vapor in the case of the calibration fluid are substantially the same as the pressure, temperature, and flowrate of the sample gas and saturated vapor in the case of the measurement fluid.
